# EUROPÄISCHE PATENTSCHRIFT

(11) **EP 1 153 174 B1**
(45) Veröffentlichungstag und Bekanntmachung des Hinweises auf die Patenterteilung: **09.03.2005**
(21) Anmeldenummer: 99967906.1
(22) Anmeldetag: 22.12.1999
(51) Int. Cl.: E03B 7/12, G05D 23/19

(54) **VORRICHTUNG ZUM BEHEIZEN EINES ZAPFVENTILS**
DEVICE FOR HEATING A TAP
DISPOSITIF PERMETTANT DE CHAUFFER UN ROBINET EXTERIEUR

(30) Priorität: 24.12.1998 DE 29822634 U; 18.06.1999 DE 29910715 U
(43) Veröffentlichungstag der Anmeldung: 14.11.2001
(73) Patentinhaber: Kindermann, Peter, 64331 Weiterstadt (DE)
(72) Erfinder: Kindermann, Peter, 64331 Weiterstadt (DE)
(74) Vertreter: Rumpler, Wolfgang, Dr.
(86) Internationale Anmeldenummer: PCT/DE1999/004091
(87) Internationale Veröffentlichungsnummer: WO 2000/039409

(56) Entgegenhaltungen:
- DE-C- 4 309 543
- DE-U- 29 605 392
- FR-A- 2 578 878
- FR-A- 2 632 704
- US-A- 3 733 459

## Beschreibung

Die vorliegende Erfindung betrifft eine Vorrichtung zum Beheizen eines Zapfventils bzw. eine Ventilvorrichtung, die mit einer solchen Heizvorrichtung ausgestattet ist.

An zahlreichen Wohngebäuden und Industrieanlagen sind Zapfventile bzw. Wasserhähne an den Außenwänden angebracht. Die Zapfventile sind somit frostgefährdet, d.h. bei Außentemperaturen unterhalb des Gefrierpunktes besteht die Gefahr, dass das Zapfventil einfriert und nach dem Auftauen beschädigt ist.

Zur Vermeidung derartiger Schäden sind solche an Außenwänden angebrachten Zapfventile in der Regel mit separaten Absperrventilen im Inneren des Gebäudes, z.B. der Kellerwand, ausgestattet. Damit wird die Zuleitung zum Außenzapfventil abgesperrt und das Außenzapfventil kann zum Schutz gegen den Frost entleert werden.

Das Entleeren des Außenzapfventils erfolgt.in der Regel nicht automatisch, sondern unterliegt der Überwachung einer Person. Damit besteht grundsätzlich die Gefahr, dass das Entleeren aus Unachtsamkeit vergessen wird oder der Zugang zu dem jeweiligen Kellerraum, in dem sich das Absperrventil befindet, nicht gewährleistet ist. Aufgrund dessen werden immer wieder zahlreiche Außenzapfventile durch Frosteinwirkung beschädigt und- müssen ersetzt werden. Neben diesen unmittelbaren Schaden tritt noch der Wasserschaden, der sich nach dem Auftauen einstellt.

In diesem Zusammenhang ist aus der Druckschrift DE-C-43 09 543 ein Zapfstel(envorschaltgerät bekannt, mit dem unmittelbar zufuhrseitig vor der Zapfstelle das in der Leitung zwischen Brauchwasserspeicher und Zapfstelle befindliche und in der Regel noch kalte Brauchwasser solange erwärmt werden kann, bis auch das aus dem Speicher nachströmende warme Brauchwasser die Zapfstelle erreicht. Hierzu ist vorgesehen, in einem mit beidseitig angeordneten Leitungsanschlüssen versehenen Gehäuse einen die mit einem Strömungswächter versehene Durchströmleitung umfassenden Heizwiderstand und zwischen diesem und dem zapfseitigen Leitungsanschluss ein Durchströmmengenregefventif anzuordnen, dessen Schließteil temperatur- oder zeitgesteuert, zwischen einer teiloffenen Endstellung und der vollen Öffnungsstellung verstellbar ist. Das Zapfstellenvorschaltgerät erwärmt somit das Brauchwasser, wenn dieses zu strömen beginnt. Es ist jedoch nicht dazu geeignet, das Einfrieren eines nicht durchströmten Zapfventils zu verhindern.

Gemäß der vorliegenden Erfindung wird das genannte Problem durch eine Heizvorrichtung gemäß Anspruch 1 gelöst. Eine derartige Heizvorrichtung zum Beheizen eines Zapfventils ist mit einer elektrothermischen Wandlereinrichtung ausgestattet, wobei die Heizvorrichtung in das Zapfventil derart montierbar ist, dass die von der elektrothermischen Wandlereinrichtung erzeugte Wärme im Wesentlichen an das Zapfventil leitbar ist und wobei die Heizvorrichtung zum Einschub in das Zapfventil patronenförmig ausgestaltet ist.

Darüber hinaus ist erfindungsgemäß vorgesehen eine Heizvorrichtung zum Beheizen eines Zapfventils mit einer elektrothermischen Wandlereinrichtung und einer Montageeinrichtung, mit der die Heizvorrichtung an das Zapfventil derart montierbar ist, dass die von der elektrothermischen Wandlereinrichtung erzeugte Wärme über die Montageeinrichtung im Wesentlichen an das Zapfventil leilbar ist, wobei die Montageinrichtung von einer ringförmigen Leiterplatine umgeben ist, die die elektrothermische Wandlereinrichtung und weitere elektrische Bauelemente zur Temperaturregelung trägt.

Der Vorteil der erfindungsgemäßen Heizvorrichtung besthet darin, daß sie, wenn sie an ein Zapfventil montiert ist, deren Einfrieren bei Außentemperaturen unterhalb des Gefrierpunktes verhinden kann. Damit wird das Zapfventil wartungsfrei und braucht nicht mehr entleert zu werden. Hausbesitzer, Hausverwaltungen und Hausmeister kommen somit nicht in die Gefahr, das Absperren und Entleeren von Außenzapfventilen zu versäumen und entsprechenden Entschädigungsforderungen ausgesetzt zu sein.

Die vorliegende Erfindung wird anhand der beigefügten Zeichnungen näher erläutert. In den Zeichnungen zeigen:
Figur 1 eine Querschnittsansicht einer Heizvorrichtung gemäß der vorliegenden Erfindung, die an ein Zapfventil montiert ist;
Figur 2 eine Draufsicht auf die in Figur 1 angedeutete Leiterplatine, auf der die elektrischen Bauelemente der Heizvorrichtung montiert werden können; und
Figur 3 den Schaltplan einer Regelschaltung für die Heizvorrichtung.
Figur 4 eine weitere Ausführungsform der vorliegenden Erfindung.

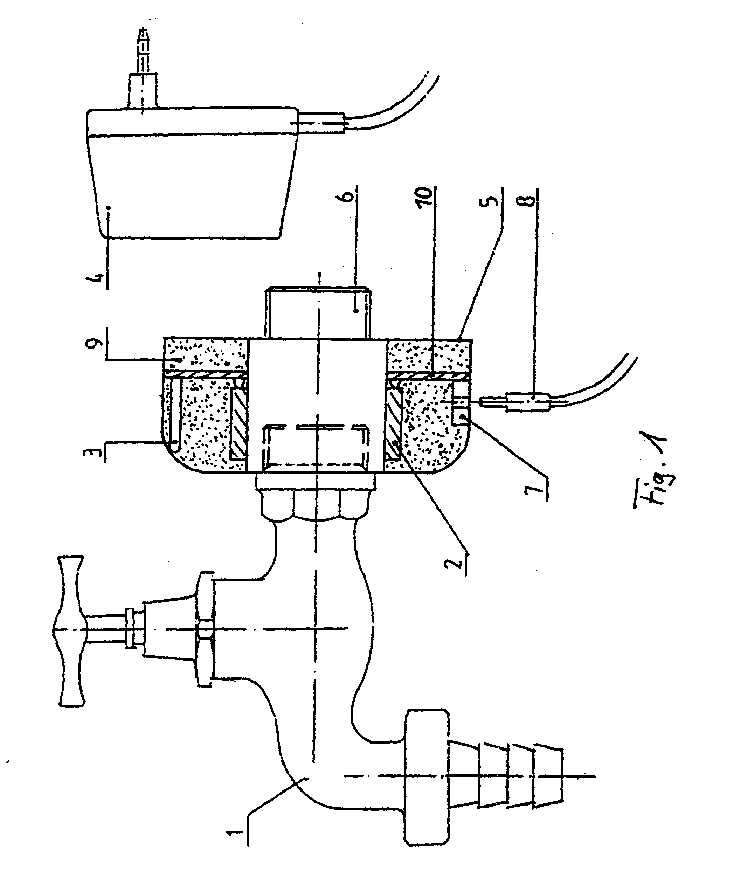

Nachfolgend wird eine bevorzugte Ausführungsform der vorliegenden Erfindung anhand von Figur 1 erläutert. Die Heizvorrichtung 2 bis 10 wird von einem Rohrstück 6 getragen. Dieses Rohrstück 6 weist auf der einen Seite ein Innengewinde und auf der anderen Seite ein Außengewinde auf und entspricht damit einer konventionellen Rohrverlängerung. Diese ist vorzugsweise aus Messing gefertigt und besitzt üblicherweise einen Durchmesser von ½, ¾ oder 1 Zoll. Das Verlängerungsrohr 6 ist an seiner in Figur 1 linken Seite auf das Gewinde eines Zapfventils bzw. Wasserhahns 1 bis zum Anschlag aufgedreht. Durch diese Schraubverbindung wird zwischen dem Verlängerungsrohr 6 und dem Zapfventil 1 eine rosettenförmige Abschlußblende 5, deren Öffnung von dem Zapfventil 1 abgewandt ist, fixiert. Sie liegt üblicherweise an einer nichtdargestellten Hauswand an. Die Länge des Verlängerungsrohrs 6 entspricht der Tiefe der rosettenförmigen Abschlußblende 5. Damit ragt aus der dem Zapfventil 1 abgewandten Seite der Abschlußblende 5 lediglich das Außengewinde der Rohrverlängerung 6. Die Länge der Rohrverlängerung 6 und damit die Tiefe der rosettenförmigen Abschlußblende 5 beträgt im vorliegenden Ausführungsbeispiel 40 mm. Diese kann selbstverständlich entsprechend der Heizvorrichtung oder anderen Bedingungen variiert werden.

Zwischen dem Außendurchmesser der Rohrverlängerung 6 und dem Innendurchmesser der Abschlußblende 5 ist gemäß Figur 1 eine ringförmige Leiterplatine 10 eingepaßt. Diese trägt die für die Heizung notwendige elektrothermische Wandlereinrichtung 2. Diese besteht bei der vorliegenden Ausführungsform aus mehreren Heizwiderständen, die durch Biegen oder dergleichen in unmittelbaren Kontakt mit der Rohrverlängerung 6 gebracht werden. Durch diesen unmittelbaren Kontakt wird die Wärmeenergie der Heizwiderstände wirksam von der Rohrverlängerung 6 abgeleitet, die die Wärme wiederum an das Zapfventil 1 weiterleitet, so daß ein Einfrieren der darin befindlichen Flüssigkeiten verhindert werden kann.

Weiterhin trägt die Platine einen Temperaturfühler 3, der nahe der Abschlußblende 5 in einiger Entfernung von den Heizwiderständen 2 angeordnet ist. Damit erfaßt der Temperaturfühler 3 nicht die Temperatur der Heizelemente 2, sondern die der gesamten Heizvorrichtung. Prinzipiell ist die Position des Temperaturfühlers 3 für die Funktonsweise der Heizvorrichtung nicht ausschlaggebend. Der Position des Temperaturfühlers 3 ist lediglich durch eine entsprechend ausgelegte Hysterese der Temperaturregelschaltung, die das Signal des Temperaturfühlers 3 zur Regelung der Heizwiderstände 2 verwendet, Rechnung zu tragen.

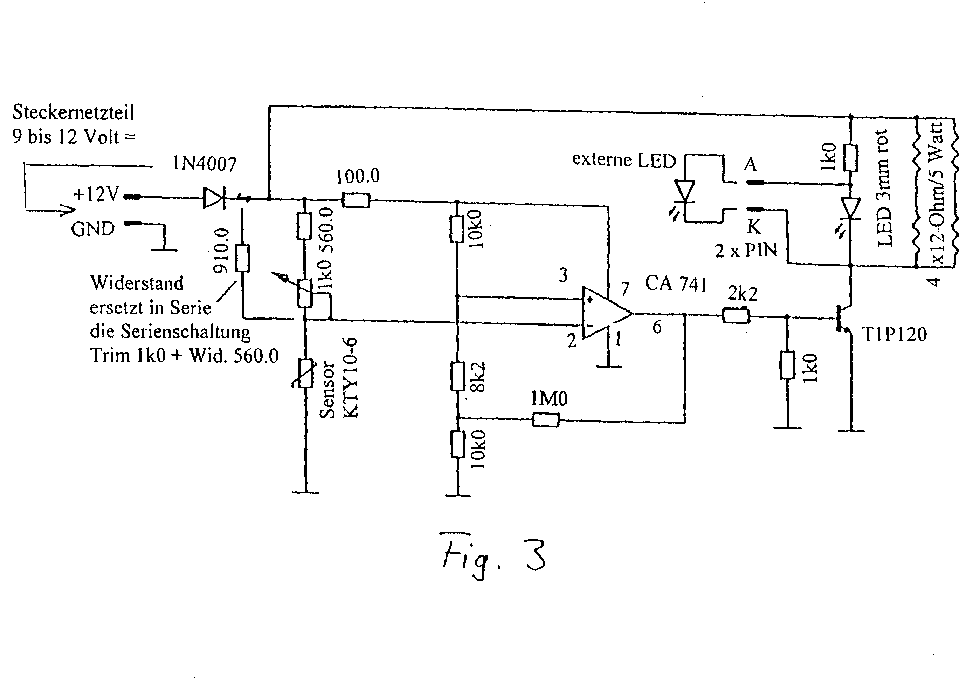

Darüber hinaus befinden sich auf der ringförmigen Platine 10 weitere elektrische Bauelemente, die für die Temperaturregelung notwendig sind: Einige davon sind im Zusammenhang mit Fig. 3 erläutert.

Schließlich ist bei der vorliegenden Ausführungsform auf der ringförmigen Platine am Rand auch eine Anschlußbuchse 7 montiert. Über diese Buchse wird die Platine 10 durch die Abschlußblende 5 mit elektrischer Leistung versorgt.

Gemäß Figur 1 erfolgt die Stromversorgung der Platine 10 durch ein Netzteil bzw. einen Transformator 4, der die konventionelle Wechselspannung von 230 Volt, gegebenenfalls 110 Volt, auf eine Gleichspannung von 9 - 12 Volt transformiert. Dieser Transformator 4, der innerhalb oder außerhalb des Gebäudes eingesteckt werden kann, liefert den notwendigen Strom für die Heizung über ein Kabel und einen Stecker 8 an die Buchse 7.

Die Leiterplatine 10 ist zum Schutz gegen äußere Einwirkungen zusammen mit den auf ihr befindlichen Bauteilen in die rosettenförmige Abschlußblende 5 mit Kunstharz eingegossen. Damit entsteht eine sehr kompakte und widerstandsfähige Heizvorrichtung.

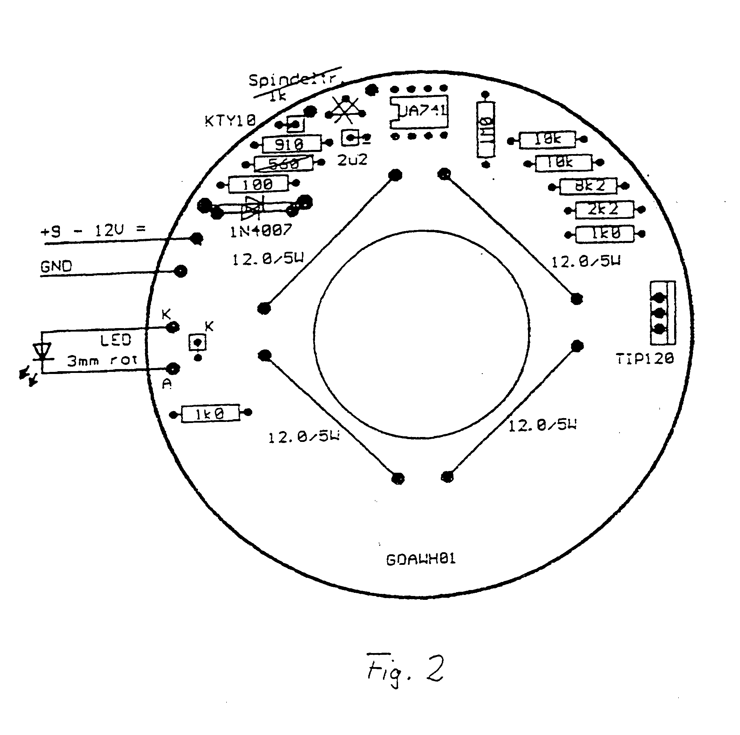

Figur 2 zeigt eine Draufsicht der ringförmigen Platine 10. Der Innenkreisdurchmesser entspricht etwa dem Außendurchmesser des Verlängerungsrohrs 6. Der Außendurchmesser etwa dem Innendurchmesser der Abschlußblende 5.

Die elektrischen Bauelemente für die Temperaturregelungsschaltung (vgl. Figur 3) sind in der Nähe des Außenkreises angeordnet. In Figur 2 sind vier Heizwiderstandselemente mit 12,0 Ohm und 5 Watt durch Striche zwischen den dazugehörigen Anschlußbohrungen angedeutet.

Im linken oberen Bereich der Platine in Figur 2 sind die Anschlüsse für einen Spindeltrimrnwiderstand von 1 Kiloohm und einem dazugehörigen Reihenwiderstand von 560 Ohm angedeutet. Als Zeichen, daß sie bei der Serienfertigung durch einen Festwiderstand, hier 910 Ohm, ersetzt werden, sind sie ausgestrichen.

Die der Bestückung der Leiterplatine 10 von Figur 2 entsprechende Temperaturregelungsschaltung ist in Figur 3 dargestellt. Über den Temperaturfühler, hier ein Siliziumsensor KTY10-6, wird die Außentemperatur bzw. die Temperatur der Heizvorrichtung gemessen und das Ausgangssignal mit einer einstellbaren Spannung verglichen. Die einstellbare Spannung kann, wie erwähnt, durch einen Festwiderstand fest oder beispielsweise durch einen Spindeltrimmwiderstand individuell vorgegeben werden. Üblicherweise wird der Wert so eingestellt, daß er kanpp über 0°C liegt. Wird dieser untere Vorgabewert unterschritten, so werden die vier Heizwiderstände 2 eingeschaltet. Sie heizen sich auf und geben durch Kontakt an die Rohrverlängerung 6 bzw. ein Wasserleitungsrohr Wärme dorthin ab. Wenn durch die Aufheizung eine bestimmte Temperatur, ein oberer Vorgabewert, überschritten wird, werden die Heizwiderstände abgeschaltet und kühlen ab, bis der untere Vorgabewert wieder unterschritten wird. Bei der vorliegenden Ausfiihrungsform ist zwischen dem unteren und oberen Temperaturvorgabewert eine Hysterese von ca. 4°C gewählt. Der beschriebene Aufheiz-Abkühl-Vorgang wiederholt sich so lange, bis die Außentemperatur so weit ansteigt, daß der untere Vorgabewert nicht mehr unterschritten wird.

Als Heizwiderstände sind hier keramische Widerstände gewählt, an die über einen Transistor Spannung angelegt wird. Die in den Widerständen umgesetzte elektrische Energie führt zur Erwärmung der Widerstände und dadurch zur Aufheizung des gesamten Systems. Die Heizwiderstände können aber auch aus Heizspulen mit Widerstandsdraht oder einem oder mehreren Heizbändem bzw. Kombinationen davon bestehen.

Nachfolgend werden einige Modifikationen der oben beschriebenen Heizvorrichtung zum Beheizen eines Zapfventils vorgestellt.

Die elektrothermische Wandlereinrichtung 2 kann aus einem oder mehreren der genannten und folgenden Bauelemente bestehen. So können neben den Heizwiderstandselementen auch induktive Heizungselemente vorgesehen werden. Diese induktiven Heizelemente sind in oder an dem Zapfventil 1 bzw. einer entsprechenden Rohrverlängerung derart anzubringen, daß diese(s) durch induzierte Wirbelströme aufgeheizt wird. Daneben ist es auch denkbar, daß die Heizwiderstandselemente durch Anordnungen von Heizwiderstandsdrähten ersetzt werden. Eine derartige Anordnung kann eine Heizspule darstellen, die um die Rohrverlängerung 6 gewickelt ist. Heizwiderstände können aber auch meanderformig etc. am Umfang des Verlängerungsrohrs angeordnet sein. Ebenso kann die Rohrverlängerung 6 mit einem Heizband umwickelt werden. Auch andere elektrothermische Wandlerelemente, z.B. Peltier-Elemente, können als Heizelemente verwendet werden.

Bei der vorliegenden Ausführungsform ist die Heizvorrichtung als Zwischenstück zwischen dem Zapfventil 1 und einem Leitungsrohr ausgestaltet. Es ist aber ebenso denkbar, daß die Heizvorrichtung aus zwei zusammenklappbaren Ringhälften besteht, die unmittelbar an das Zapfventil montierbar sind. Des weiteren muß die Heizvorrichtung nicht konzentrisch um ein Leitungsrohr angeordnet sein. Vielmehr ist es auch möglich, daß das Zapfventil lediglich lokal, z.B. unterhalb oder an der Ventilschraube, durch die Heizvorrichtung aufgeheizt wird. Da das Zapfventil in der Regel aus gut wärmeleitendem Material besteht, verteilt sich auch dann die Wärme auf das gesamte Zapfventil, so daß ein Einfrieren verhindert werden kann.

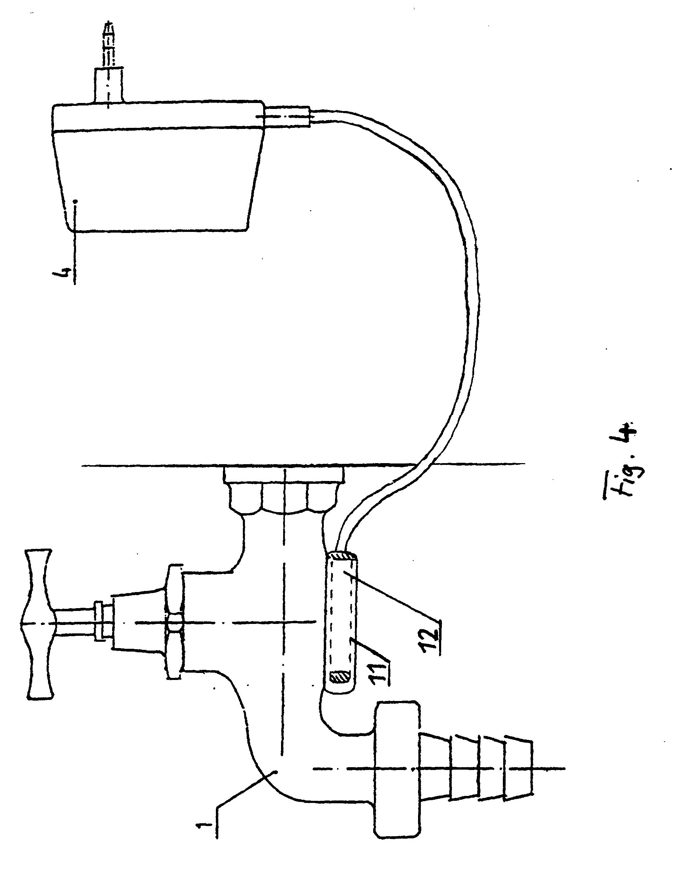

In diesem Zusammenhang zeigt Figur 4 eine weitere Ausführungsform der vorliegenden Erfindung. Dabei ist die Heizvorrichtung nicht als Rosette 5 zwischen der Wand und dem Zapfventil 1 sondern unterhalb der Ventilschraube in einer Buchse 11 in oder an dem Zapfventil 1 vorgesehen. Die Buchse 11 ist entweder durch ein gängiges Befestigungsverfahren an dem Zapfventil befestigt oder direkt in den Körper des Zapfventils 1 eingegossen. Eine in die Buchse 11 einschiebbare Patrone 12 beinhaltet das elektrothermische Wandlerelement und vorzugsweise auch einen Temperaturfühler bzw. Thermostat. Die Öffnung der Buchse 11 ist zur Hauswand gerichtet, so daß die Heizpatrone 12 im montierten Zustand des Zapfventils 1 nicht aus der Buchse 11 entnehmbar ist. Eine Wärmeleitpaste sorgt für einen verbesserten Wärmeübergang zwischen Heizpatrone 12 und Buchse 11. Die Heizpatrone 12 kann wasserdicht in die Buchse 11 eingegossen werden.

Wenn Sicherheitsaspekte unkritisch sind, ist es auch denkbar, daß die Heizvorrichtung vertikal nach oben in eine Buchse des Zapfventils einsteckbar und nach unten aus ihr entnehmbar ist. Alternativ kann die Heizvorrichtung auch mit einer Montageeinrichtung ausgestattet sein, mit der die Heizvorrichtung an konventionelle Zapfventile anbringbar ist. So können beispielsweise Klemm-, Schraub- oder magnetische Halterungen als Montageeinrichtung verwendet werden. Eine derartige Montageeinrichtung bietet den Vorteil, daß prinzipiell jedes Zapfventil kostengünstig mit einer Heizvorrichtung nachrüstbar ist.

Grundsätzlich kann die Temperaturregelung bzw. -steuerung auch über einen externen Temperaturfühler erfolgen. Ebenso kann die Temperaturregel- bzw. -steuervorrichtung auch im Inneren des Gebäudes plaziert und entsprechende Steuer- bzw. Regelsignale nach außen zu der Heizvorrichtung geführt werden. Ferner kann statt der Hysterese von 4°C beim Aufheiz-Abkühl-Vorgang auch eine größere oder kleinere Hysterese gewählt werden. So kann das Zapfventil beispielsweise von 0 auf 12 bis 18°C aufgeheizt werden. Darüber hinaus ist es auch denkbar, eine Heizvorrichtung im Bedarfsfall ständig mit Strom zu versorgen, so daß eine kontinuierliche Heizwirkung gewährleistet wird. Es stellt sich dann ein natürliches Temperaturgleichgewicht zwischen zugeführter und an die Umgebung abgegebener Wärme ein.

Zur Verminderung des Montageaufwands durch den Endverbraucher kann die Heizvorrichtung auch fest an ein Zapfventil montiert werden. Damit braucht der Endverbraucher lediglich anstelle des konventionellen Zapfventils das beheizbare Zapfventil an das Leitungsrohr zu montieren. Dadurch läßt sich auch eine Beschädigung durch unsachgemäßen Zusammenbau verhindern.

Schließlich ist auch denkbar, bei entsprechender Isolierung das Netzteil 4 direkt in die Heizvorrichtung zu integrieren.

Die Ventilvorrichtung besteht vorzugsweise aus einem Kugelzapfventil.

## Patentansprüche

1. Heizvorrichtung zum Beheizen eines Zapfventils (1) mit einer elektrothermischen Wandlereinrichtung (2), wobei die Heizvorrichtung in das Zapfventit (1 )- derart montierbar ist, dass die von der elektrothermischen Wandlereinrichtung (2) erzeugte Wärme im Wesentlichen an das Zapfventil (1) leitbar ist,
**dadurch gekennzeichnet, dass**
die Heizvorrichtung zum Einschub in das Zapfventil (1) patronenförmig ausgestaltet ist.

2. Heizvorrichtung nach Anspruch 1 mit einem Temperaturfühler (3) zum Ansteuern der elektrothermischen Wandlereinrichtung (2) auf der Grundlage der Umgebungstemperatur.

3. Heizvorrichtung nach Anspruch 2, die ferner einen Thermostat, bestehend aus dem elektrischen Temperaturfühler (3) und einer Heizregelschaltung, bei der ein Temperatursollwert vorgebbar ist, umfasst.

4. Heizvorrichtung zum Beheizen eines Zapfventils (1) mit einer elektrothermischen Wandlereinrichtung (2) und einer Montageeinrichtung (6), mit der die Heizvorrichtung an das Zapfventil (1) derart montierbar ist, dass die von der elektrothermischen Wandlereinrichtung (2) erzeugte Wärme über die Montageeinrichtung im Wesentlichen an das Zapfventil leitbar ist,
**dadurch gekennzeichnet, dass**
die Montageinrichtung (6) von einer ringförmigen Leiterplatine (10) umgeben ist, die die elektrothermische Wandlereinrichtung (2) und weitere elektrische Bauelemente zur Temperaturregelung trägt.

5. Heizvorrichtung nach Anspruch 4, wobei die Montageeinrichtung (6) eine Rohrverlängerung umfasst.

6. Heizvorrichtung nach Anspruch 4 oder 5, wobei ein oder mehrere Elemente von dem Temperaturfühler (3), einer Temperaturregel- oder -steuerschaltung, der elektrothermischen Wandlereinrichtung (2) und einer Anschlussbuchse (7) zum Einspeisen elektrischer Energie in die elektrothermische Wandlereinrichtung (2) mit Kunstharz in einer rosettenförmigen, an dem Zapfventil (1) anbringbaren Abschlussblende oder anderen Schützhülle vorgesehen ist/sind.

7. Heizvorrichtung nach einem der vorhergehenden Ansprüche, wobei die elektrische Wandlereinrichtung ein ohmsches oder induktives Wandlerelement, insbesondere einen Heizwiderstand oder eine Induktionsspule, umfasst.

8. Heizvorrichtung nach einem der vorhergehenden Ansprüche, wobei die Montageeinrichtung ein Leitungsrohr und die elektrische Wandlereinrichtung ein oder mehrere Wandlerelemente umfasst, das/die konzentrisch um das Leitungsrohr, welches Teil des Zapfventils ist oder an dieses anschließbar ist, angeordnet ist/sind.

9. Ventilvorrichtung mit einem Zapfventil (1) und einer Heizvorrichtung nach einem der vorhergehenden Ansprüche.

10. Ventilvorrichtung nach Anspruch 9, wobei in oder an der Ventilvorrichtung eine Buchse (11) vorgesehen ist, in die die Heizvorrichtung einsteckbar ist.

## Claims

1. Heating device for heating a tap valve (1) including an electro-thermal converter means (2), the heating device being mountable in the tap valve (1) such that the heat generated by the electro-thermal converter means (2) is substantially conductible to the tap valve (1),
**characterized in that**
the heating device is designed cartridge-shaped for inserting into the tap valve (1).

2. Heating device according to claim 1, including a temperature sensor (3) for driving the electro-thermal converter means (2) based on the ambient temperature.

3. Heating device according to claim 2, further comprising a thermostat consisting of the electrical temperature sensor (3) and a heating control circuit, in which a temperature set value is able to be preset.

4. Heating device for heating a tap valve (1) including an electro-thermal converter means (2) and a mounting means (6), by which the heating device is mountable to the tap valve (1) such that the heat generated by the electro-thermal converter means (2) is substantially conductible to the tap valve through the mounting means,
**characterized in that**
the mounting means (6) is surrounded by an annular circuit board (10), which supports the electro-thermal converter means (2) and further electrical components for temperature control.

5. Heating device according to claim 4, wherein the mounting means (6) includes a tube extension.

6. Heating device according to claim 4 or 5, wherein one or more members of the temperature sensor (3), a temperature regulation or control circuit, the electro-thermal converter means (2) and a connecting socket (7) for feeding-in electrical energy into the electro-thermal converter means (2) is/are provided with synthetic resin in a rosette-shaped terminal shield or other protecting shell attachable to the tap valve (1).

7. Heating device according to any one of the preceding claims, wherein the electrical converter means includes a resistive or inductive converter member, especially a heating resistor or an induction coil.

8. Heating device according to any one of the preceding claims, wherein the mounting means includes a line tube, and the electrical converter means includes one or more converter members, which is/are disposed concentrically around the line tube, which is a part of the tap valve or is connectable to it.

9. Valve device including a tap valve (1) and a heating device according to any one of the preceding claims.

10. Valve device according to claim 9, wherein a socket (11) is provided in or at the valve device, into which the heating device is insertable.

## Revendications

1. Dispositif de chauffe d'un pistolet de remplissage (1) comprenant un dispositif transformateur électrothermique (2), le dispositif de chauffe étant adapté pour être monté dans le pistolet de remplissage (1) de façon à ce que la chaleur produite par le dispositif transformateur électrothermique (2) puisse sensiblement être amenée au pistolet de remplissage (1),
**caractérisé en ce**
**que** le dispositif de chauffe est conçu sous forme de cartouche pour permettre son introduction dans le pistolet de remplissage (1).

2. Dispositif de chauffe selon la revendication 1 comprenant un thermocouple (3) pour exciter le dispositif transformateur électrothermique (2) en fonction de la température ambiante.

3. Dispositif de chauffe selon la revendication 2 comprenant par ailleurs un thermostat comportant un thermocouple électrique (3) et un circuit de régulation de chauffe permettant le préréglage d'une température de consigne.

4. Dispositif de chauffe d'un pistolet de remplissage (1) comprenant un dispositif transformateur électrothermique (2) ainsi qu'un dispositif de montage (6) permettant le montage du dispositif de chauffe au pistolet de remplissage (1) de façon à ce que la chaleur produite par le dispositif transformateur électrothermique (2) puisse sensiblement être amenée au pistolet de remplissage (1),
**caractérisé en ce**
**que** le dispositif de montage (6) est entouré par une platine conductrice annulaire (10) supportant le dispositif transformateur électrothermique (2) et d'autres composants électriques servant au réglage de la température.

5. Dispositif de chauffe selon la revendication 4, le dispositif de montage (6) comportant une rallonge tubulaire.

6. Dispositif de chauffe selon la revendication 4 ou 5, un ou plusieurs éléments du thermocouple (3), d'un circuit de réglage ou d'asservissement de la température, du dispositif transformateur électrothermique (2) et d'une prise de courant (7) prévue pour approvisionner le dispositif transformateur électrothermique (2) en énergie électrique est conçu/sont conçus pour être intégré/s, à l'aide d'une résine synthétique, dans un écran de protection sous forme de rosette ou une autre enveloppe protectrice susceptible d'être monté(e) sur le pistolet de remplissage (1).

7. Dispositif de chauffe selon l'une des revendications précédentes, le dispositif transformateur électrothermique comportant un élément transformateur ohmique ou inductif, notamment une résistance chauffante ou une bobine d'inductance.

8. Dispositif de chauffe selon l'une des revendications précédentes, le dispositif de montage comportant un conduit et le dispositif transformateur électrothermique comportant un ou plusieurs éléments transformateurs disposé/s de manière concentrique autour du conduit; qui, lui, est partie intégrante du pistolet de remplissage ou susceptible d'être rapporté à celui-ci.

9. Dispositif à pistolet comprenant un pistolet de remplissage (1) et un dispositif de chauffe selon l'une des revendications précédentes.

10. Dispositif à pistolet selon la revendication 9, une prise femelle (11) étant prévue dans ou rapporté sur le dispositif distributeur permettant le raccordement du dispositif de chauffe.
